# EUROPEAN PATENT APPLICATION

(11) **EP 4 414 051 A1**
(43) Date of publication of application: **14.08.2024**
(21) Application number: 23156123.4
(22) Date of filing: 10.02.2023
(51) Int. Cl.: B01D 53/86, B01D 53/94, B01J 29/68, B01J 29/76, B01J 35/00, B01J 35/04

(54) **SYSTEM FOR TREATING EXHAUST GAS FROM NITROGEN-CONTAINING-FUEL- OR HYDROGEN-COMBUSTOR**

(71) Applicant: Johnson Matthey Public Limited Company, London EC4A 4AB (GB)
(72) Inventor: ALCOVE CLAVE, Silvia, Sonning Common RG4 9NH (GB); GEORGIEVA, Veselina Mihaylova, Sonning Common RG4 9NH (GB); MANTAROSIE, Loredana, Sonning Common RG4 9NH (GB); RUGGERI, Maria Pia, Sonning Common RG4 9NH (GB); VILLAMAINA, Roberta, Sonning Common RG4 9NH (GB)
(74) Representative: Johnson Matthey Plc

(57) **Abstract**

Provided is a fuel combustion and exhaust gas system comprising a fuel combustor and an exhaust gas treatment system, wherein the fuel combustor is a nitrogen-containing-fuel- or hydrogen-combustor and wherein the exhaust gas treatment system comprises a first catalyst article comprising an Fe-loaded small- or medium-pore molecular sieve, the small- or medium-pore molecular sieve having a silica-to-alumina ratio (SAR) of from 6 to 19.

## Description

The present invention relates to a system for treating exhaust gas from a nitrogen-containing-fuel- or hydrogen-combustor and in particular to a catalyst that is particularly suitable for such a purpose.

It is well known that there is a general trend in the field of automotive engines to move towards and investigate the suitability of engines that consume fuels other than fossil fuels, such as gasoline and diesel, in order to reach the net zero CO₂ emissions targets. These alternative fuels include hydrogen (H₂), ammonia (NH₃) and methanol (CHsOH), for example. However, of course, the use of such new fuels means that the composition of the exhaust gas produced by burning such fuels is also different to the composition of the exhaust gas in fossil-fuel-burning engines.

One significant difference between the composition of the exhaust gas produced by these alternative fuels and the composition of the exhaust gas produced by conventional fossil fuels is that these alternative fuels may produce much higher N₂O emissions. In other words, the concentration of N₂O in the exhaust gas produced by these alternative fuels may be much higher than in the exhaust gas produced by conventional fossil fuels.

There is therefore a need to develop exhaust-gas catalysts for the treatment of the exhaust gas produced by these alternative fuels that are effective against the unique profile of pollutants in this exhaust gas. It cannot be guaranteed that the catalysts conventionally used in exhaust systems for fossil-fuel-burning engines would be effective against the completely different composition of the exhaust gas produced by burning these new alternative fuels.

The present invention seeks to tackle at least some of the problems associated with the prior art or at least to provide a commercially acceptable alternative solution thereto.

The present invention provides a fuel combustion and exhaust gas system, a method of treating an exhaust gas and a use of the catalyst described herein according to the claims appended hereto.

Specifically, in a first aspect the present invention provides a fuel combustion and exhaust gas system comprising a fuel combustor and an exhaust gas treatment system, wherein the fuel combustor is a nitrogen-containing-fuel- or hydrogen-combustor and wherein the exhaust gas treatment system comprises a first catalyst article comprising an Fe-loaded small- or medium-pore molecular sieve, the small- or medium-pore molecular sieve having a silica-to-alumina ratio (SAR) of from 6 to 19.

Each aspect or embodiment as defined herein may be combined with any other aspect(s) or embodiment(s) unless clearly indicated to the contrary. In particular, any features indicated as being preferred or advantageous may be combined with any other feature indicated as being preferred or advantageous.

The Inventors have surprisingly found that catalysts comprising Fe-loaded small- and medium-pore molecular sieves may exhibit particularly high N₂O conversion when treating exhaust gases, and further that reducing the SAR of said molecular sieves may increase the N₂O conversion of the catalyst even further. This is unexpected. Such catalysts may therefore be particularly effective for use in exhaust systems for treating exhaust gas produced by combustors that burn fuels that may generate relatively high concentrations of N₂O, including engines that burn alternative fuels, such as ammonia and hydrogen.

By "N₂O conversion", this is intended to refer to the typical chemical reaction that is facilitated by such a catalyst, which is: 2N₂O → 2N₂ + O₂.

The Inventors have also surprisingly found that the Fe-loaded molecular sieves of the present invention exhibit increased N₂O conversion compared to Fe-loaded large-pore molecular sieves, and to small- and medium-pore molecular sieves having higher SARs. This has not previously been investigated.

These results are also particularly surprising because it is not conventional to aim to reduce the SAR in molecular sieves for use in the treatment of exhaust gas from combustors, such as from combustion engines. This is because it is known that, in general, reducing the SAR of such molecular sieves (or zeolites, in particular) may reduce the hydrothermal stability of the molecular-sieve-based catalyst. A reduction in hydrothermal stability is clearly undesirable for such applications, in which a typical operating environment may involve temperatures of several hundred degrees Celsius. However, for the present invention, the advantages gained in N₂O conversion may offset, at least to some extent, the disadvantages of reducing the SAR of the molecular sieve.

N₂O may be generated by nitrogen-containing-fuel- or hydrogen-combustors such as hydrogen- and ammonia-combustion engines (particularly ammonia-combustion engines) in large concentrations. Accordingly, the catalyst described herein may be particularly advantageous when used in such applications, such as in the present invention.

Moreover, in ammonia-combustion engines, in particular, any ammonia fuel (and NOₓ emissions generated thereby) that slips through to the exhaust gas can react at the first catalyst article to remove the ammonia (and NOₓ in a selective catalytic reduction (SCR) reaction). The presence of the ammonia may also enable the Fe-based molecular sieve of the invention to convert the N₂O at a lower temperature than in the absence of ammonia. Thus, ammonia slip through the engine may actually assist in the abatement of the large amount of N₂O generated by the ammonia-combustion engine. This mechanism provides a further unexpected benefit associated with the use of the Fe-loaded molecular sieve of the present invention for the treatment of exhaust gas produced by the use of alternative fuels.

The term "nitrogen-containing-fuel- or hydrogen-combustor" as used herein may encompass a fuel combustor that is designed to burn a fuel that comprises molecules comprising nitrogen, or that comprises hydrogen, respectively. Preferably, greater than 30 mol.% of the molecules in the nitrogen-containing fuel contain nitrogen, more preferably greater than 50 mol.%, even more preferably greater than 70 mol.% and still more preferably greater than 90 mol.%. Preferably, the nitrogen-containing fuel comprises one or more of ammonia, an ammonia precursor (such as amines and/or urea) and organic waste. Preferably, the nitrogen-containing fuel comprises ammonia. Of course, the term "nitrogen-containing-fuel- or hydrogen-combustor" may therefore encompass a fuel combustor that is designed to burn a dual- or mixed-fuel comprising a nitrogen-containing fuel (preferably ammonia) or hydrogen, such as a fuel mixed with diesel, marine diesel oil, heavy fuel oil and/or natural gas. In an alternative aspect, the fuel combustor is a methanol-combustor.

Preferably, the fuel combustor comprises a combustion chamber. Preferably, the fuel combustor is a combustion engine, more preferably an internal combustion engine, even more preferably an automotive internal combustion engine. In other words, the fuel combustor is preferably a nitrogen-containing-fuel- or hydrogen-combustion engine. The term "engine" as used herein may encompass an engine in the conventional sense, such as an engine for use in automobiles and the like. In alternative preferred embodiments, the fuel combustor is an industrial fuel combustor, such as a fuel combustor that burns fuels during industrial processes, such as in ammonia cracking or (organic) waste incineration processes, rather than an engine for use in automobiles and the like, for example.

The term "first" as used herein is intended as a label and does not limit the relative arrangement or location of the corresponding feature (here, the catalyst article) within the exhaust gas treatment system, unless otherwise specified.

The term "article" or "catalyst article" as used herein may encompass an article in which a catalyst is supported thereon or therein. The article may take the form of, for example, a honeycomb monolith, such as a flow-through monolith or a filter, e.g. a wall flow filter. The catalyst article may also be in pellet form.

The term "Fe-loaded" as used herein may encompass that the molecular sieve is metal-promoted with Fe, wherein the Fe maybe loaded into the molecular sieve. In a metal-loaded molecular sieve, the loaded metal is a type of "extra-framework metal", that is, a metal that resides within the molecular sieve and/or on at least a portion of the molecular sieve surface. This definition does not include atoms constituting the framework of the molecular sieve.

Metal-loaded molecular sieves, in general, and methods of manufacturing such metal-loaded molecular sieves, are known to the skilled person. For example, several methods have been mentioned in the literature for preparing metal-loaded molecular sieves, in particular metal-loaded zeolites. The direct synthesis of metal-loaded zeolites is a complicated process and depends on the synthesis conditions (see M. Moliner, ISRN Materials Science, 2012, Article ID 789525). An alternative is to use a commercial zeolite support and to subsequently add metal by post-synthesis treatment of the zeolite, for example, by wet impregnation, wet ion exchange or solid-state ion exchange.

Known wet ion-exchange methods for the addition of metal to molecular sieves (e.g. zeolites) typically employ soluble metal salts, such as metal acetates, metal sulphates or metal chlorides, as the active metal precursor, wherein the active metal precursor is reacted with the molecular sieve in aqueous solution. In order to accelerate ion-exchange, such processes typically require a heating step, wherein the mixture may be heated to a temperature in the range 70 to 80°C for up to several hours.

The term "molecular sieve" as used herein is well known to the skilled person and may encompass crystalline or quasi-crystalline materials which can be, for example aluminosilicates (zeolites) or silicoaluminophosphates (SAPOs). Such molecular sieves are constructed of repeating SiO₄, AlO₄, and optionally PO₄ tetrahedral units linked together, for example in rings, to form frameworks having regular intra-crystalline cavities and channels of molecular dimensions. The specific arrangement of tetrahedral units (ring members) gives rise to the molecular sieve's framework, and by convention, each unique framework is assigned a unique three-letter code (e.g., "CHA") by the International Zeolite Association (IZA).

Molecular sieves may exist as "H⁺-form" or "NH₄⁺ form" molecular sieves, for example. The term "H⁺-form" in relation to a molecular sieve refers to a molecular sieve having an anionic framework wherein the charge of the framework is counterbalanced by protons (i.e. H⁺ cations). The term "NH₄⁺ form" in relation to a molecular sieve refers to a molecular sieve having an anionic framework wherein the charge of the framework is counterbalanced by ammonium cations (NH₄⁺ cations). When metal-loaded (e.g. Fe), these molecular sieves are no longer considered to be in their "H⁺-form" or "NH₄⁺ form".

Molecular sieves (e.g. zeolites) may also be categorised by pore size, e.g. a maximum number of tetrahedral atoms present in a molecular sieve's framework. As defined herein, a "small-pore" molecular sieve, such as CHA, contains a maximum ring size of eight tetrahedral atoms, whereas a "medium-pore" molecular sieve, e.g. MFI, contains a maximum ring size of ten tetrahedral atoms; and a "large-pore" molecular sieve, such as BEA, contains a maximum ring size of twelve tetrahedral atoms. In the present invention, the small- or medium-pore molecular sieve is defined as such in accordance with these generally understood definitions.

The present aspect requires that the first catalyst article comprises an Fe-loaded small- or medium-pore molecular sieve. Of course, therefore, the invention may encompass an embodiment in which the first catalyst article comprises Fe loaded on two or more different small- or medium-pore molecular sieves. The term "different" small- or medium-pore molecular sieves may encompass that the framework (i.e. the Framework Type Code) of the molecular sieve, or another property of the molecular sieve, such as the SAR, is different.

The term "silica-to-alumina ratio" or "SAR" as used herein may encompass the molar ratio of silicon to aluminium present in the molecular sieve framework, calculated on the basis of the silica (SiO₂) and the alumina (Al₂O₃), rather than the silicon and aluminium atoms. Of course, in the chemical structure of the molecular sieve framework, the silicon and aluminium will not typically be present in the form of discrete silica and alumina. The SAR is a term commonly used in the art and would be understood by the skilled person.

It should be understood that the fuel combustor is in fluid communication with the exhaust gas treatment system.

The first catalyst article may typically comprise a substrate and the Fe-loaded small- or medium-pore molecular sieve disposed on the substrate. The term "substrate" as used herein may encompass, for example, a ceramic or metallic flow-through honeycomb, or a filter block, e.g. a wall flow filter. The substrate may comprise a ceramic or metallic monolithic substrate. The substrate may vary in its material composition, size and configuration, cell shape and density, and wall thickness. Suitable substrate materials are known in the art, such as cordierite.

The term "disposed on" as used herein may encompass either having a catalytic composition directly disposed on the substrate, i.e. with no intervening material, and/or indirectly disposed on the substrate, i.e. with intervening material. If the substrate is porous, then the term "disposed on" may also encompass having the catalytic composition disposed therein, for example within the pores of the substrate, i.e. wherein the catalytic composition is disposed thereon and/or therein. The catalytic composition is typically disposed on the substrate in the form of a washcoat. The term "washcoat" as used herein is well-known in the field and refers to an adherent coating that is applied to a substrate usually during the production of a catalyst. How the molecular sieve may be disposed on the substrate is not particularly important for the purpose of the present invention.

Alternatively, the first catalyst article may comprise an "all-active extrudate" wherein a substrate comprises an extrusion of the Fe-loaded small- or medium-pore molecular sieve, i.e. the substrate itself is catalytically active.

Where the molecular sieve is a small-pore molecular sieve, the small-pore molecular sieve may have a framework defined by a Framework Type Code selected from ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, KFI, LEV, LTA, MER, MON, NSI, OWE, PAU, PHI, RHO, RTH, SAT, SAV, SFW, SIV, THO, TSC, UEI, UFI, VNI, YUG, and ZON, and mixtures and/or intergrowths thereof.

Where the molecular sieve is a medium-pore molecular sieve, the medium-pore molecular sieve may have a framework defined by a Framework Type Code selected from AEL, AFO, AHT, BOF, BOZ, CGF, CGS, CHI, DAC, EUO, FER, HEU, IMF, ITH, ITR, JRY, JSR, JST, LAU, LOV, MEL, MFI, MFS, MRE, MTT, MVY, MWW, NAB, NAT, NES, OBW, PAR, PCR, PON, PUN, RRO, RSN, SFF, SFG, STF, STI, STT, STW, SVR, SZR, TER, TON, TUN, UOS, VSV, WEI, and WEN, and mixtures and/or intergrowths thereof.

Preferably, the molecular sieve of the first catalyst article is a small-pore molecular sieve. However, also preferred is a small- or medium-pore molecular sieve having a framework defined by a Framework Type Code selected from CHA, FER, MFI, AEI and AEI-CHA intergrowth, preferably selected from CHA, FER, AEI and AEI-CHA intergrowth. Most preferred are the small-pore Framework Type Codes CHA and AEI. That is, the molecular sieve preferably has a framework defined by a Framework Type Code selected from CHA and AEI and most preferably the molecular sieve has a framework defined by a Framework Type Code CHA.

Fe-loaded molecular sieves having frameworks defined by these preferred specific Framework Type Codes have been shown to exhibit higher N₂O conversion than small-pore molecular sieves with higher SAR (such as Fe/CHA having a SAR of 25) and Fe-loaded large-pore molecular sieves (such as Fe/BEA).

Preferably, the small- or medium-pore molecular sieve of the first catalyst article is a small- or medium-pore zeolite.

The small- or medium-pore molecular sieve is preferably a powdered crystalline molecular sieve (i.e. in particulate form), wherein the particles comprise individual crystals, agglomerations of crystals or a combination of both. The crystalline molecular sieve may have a mean crystal size, as measured by scanning electron microscopy (SEM), of ≥ 0.5 µm, preferably between about 0.5 and about 15 µm, such as about 0.5 to 10 µm, about 0.5 to about 5 µm, about 1 to about 5 µm, or about 2 to about 5 µm.

Preferably, the small- or medium-pore molecular sieve of the first catalyst article has a SAR of from 6 to 18, more preferably from 6 to 17, more preferably from 6 to 15, more preferably from 6 to 13, more preferably from 7 to 12, more preferably from 9 to 11, even more preferably about 10. As explained above, it has been surprisingly found that lowering the SAR of the Fe-loaded small- or medium-pore molecular sieve may increase the N₂O conversion that the Fe-loaded molecular sieve can exhibit as a catalyst. The above ranges therefore may be particularly preferred. Moreover, the Inventors have found that, unexpectedly, when decreasing the SAR of the molecular sieve, the N₂O conversion performance appears to plateau at a SAR of about 10. Thus, while all of the preferred Fe-loaded molecular sieves provide a notable improvement over higher-SAR small- and medium-pore molecular sieves, and large-pore molecular sieves, a SAR of about 10 may be most preferred. This is because reducing the SAR below this value may return minimal benefit in N₂O conversion performance while risking reducing the hydrothermal stability of the molecular sieve. In other words, a SAR of about 10 provides an unexpected balance between stability of the molecular sieve and the N₂O conversion performance of the Fe-loaded molecular sieve as a catalyst.

Accordingly, in some preferred embodiments, the present invention provides a fuel combustion and exhaust gas system comprising a fuel combustor and an exhaust gas treatment system, wherein the fuel combustor is a nitrogen-containing-fuel- or hydrogen-combustor and wherein the exhaust gas treatment system comprises a first catalyst article comprising an Fe-loaded small- or medium-pore zeolite, the small- or medium-pore zeolite having a silica-to-alumina ratio (SAR) of from 6 to 13, preferably wherein the small- or medium-pore zeolite has a framework defined by a Framework Type Code selected from CHA, FER, MFI, AEI and AEI-CHA intergrowth, more preferably CHA or AEI.

Preferably, the small- or medium-pore molecular sieve of the first catalyst article is loaded with at least 0.5 wt.% Fe, more preferably at least 1.5 wt.% Fe, preferably from 1.5 to 4 wt.% Fe, more preferably about 3 wt.% Fe, based on the total weight of the Fe-loaded small- or medium-pore molecular sieve. Catalysts having an Fe loading of about 3 wt.% have been shown to exhibit the advantageous N₂O conversions described herein.

Preferably, the first catalyst article is a flow-through monolith or a wall-flow filter. In other words, if the first catalyst article comprises a substrate and the Fe-loaded small- or medium-pore molecular sieve disposed on the substrate, then the substate preferably takes the form of a flow-through monolith or a wall-flow filter. Of course, the substrate may also comprise an "all-active extrudate" wherein a substrate comprises an extrusion of the Fe-loaded small- or medium-pore molecular sieve.

Preferably, the exhaust gas treatment system further comprises a selective catalytic reduction (SCR) catalyst article upstream of the first catalyst article. The term "SCR catalyst" as used herein may encompass a catalyst that catalyses the catalytic reduction of nitrogen oxides (NOₓ), for example by ammonia. Catalysts suitable for such a function are well-known to the skilled person and the particular form of the SCR catalyst article is not particularly limited. However, a Cu-SCR catalyst, such as a Cu/zeolite, including Cu/CHA, or a V-based SCR catalyst may be used, for example.

The term "upstream" as used herein indicates a direction in the system towards the source of the exhaust gas. By contrast, the term "downstream" as used herein indicates a direction in the system away from the source of the exhaust gas.

As discussed above, the SCR catalyst may assist in the abatement of NOₓ present in the exhaust gas generated by the use of the fuel combustor. However, additionally, the SCR catalyst may generate further N₂O during use, for example as a by-product. The presence of the first catalyst article of the invention downstream of the SCR catalyst may therefore also advantageously assist in the removal of this additional N₂O (i.e. if there becomes an even higher concentration of N₂O in the exhaust gas). In other words, any N₂O by-product generated by the SCR catalyst may be less of a problem and less likely to be emitted into the atmosphere if the SCR catalyst is upstream of the first catalyst article of the invention.

Preferably, the exhaust gas treatment system further comprises an ammonia slip catalyst (ASC) article upstream of the first catalyst article. An ASC has the functionality that it can convert residual ammonia present in the exhaust gas to N₂ and H₂O. The ASC may also convert NOₓ to N₂ and H₂O. Catalysts suitable for such a function are well-known to the skilled person and the particular form of the ASC article is not particularly limited. Suitable ASC articles may comprise a PGM-loaded support material, such as a Pt-loaded zeolite or a Pt-loaded alumina, for example. Suitable ASC compositions may also be described in WO2012138405A1, WO2017134454A1, WO2018178627A1, WO2019186121A1 and EP2885514A1, for example.

For the avoidance of doubt, the exhaust gas treatment system may independently further comprise either an SCR catalyst article or an ASC article upstream of the first catalyst article. The exhaust gas treatment system may also further comprise both an SCR catalyst article and an ASC article upstream of the first catalyst article. The catalyst articles may be present as different substrates, i.e. on one or more distinct bricks, or on the same substrate, i.e. as a single brick.

Similarly to the SCR catalyst article, the ASC article may also generate further N₂O in the exhaust gas. Thus, the same advantages related to having the first catalyst article of the invention downstream of the SCR catalyst article apply to this ASC article embodiment.

In addition, the use of (only) an ASC article upstream of the first catalyst article may be particularly advantageous for use with an ammonia-combustion engine. This is because ammonia concentrations in the exhaust gas may be particularly high when the fuel comprises ammonia. Such an exhaust gas treatment system can therefore reduce both ammonia slip and N₂O slip.

If both an SCR catalyst article and an ASC article are present upstream of the first catalyst article, then the SCR catalyst article is preferably upstream of the ASC article. In other words, the exhaust gas treatment system preferably comprises, in order in the downstream direction, an SCR catalyst article, then an ASC article, then the first catalyst article of the invention. The advantages of providing an ASC article downstream of an SCR catalyst article are known. However, the advantages of further including the first catalyst article of the invention downstream of these conventional catalysts provides the further advantages described above.

Preferably, the exhaust gas treatment system further comprises a means for the injection of a nitrogenous reductant upstream of the first catalyst article. The nitrogenous reductant preferably comprises ammonia and/or urea and more preferably is ammonia and/or urea. Other known ammonia precursors may also be suitable. The advantages conferred on the ability of the first catalyst article to convert N₂O by the presence of ammonia in the exhaust gas to be treated are described above in relation to the embodiment in which the fuel combustor is an ammonia-combustion engine. However, in other embodiments, it may be beneficial to artificially introduce ammonia into the exhaust gas upstream of the first catalyst article. In the embodiment in which the fuel combustor is an ammonia-combustion engine, it may also be beneficial to increase the concentration of ammonia in the exhaust gas even further for the same reasons.

When the exhaust gas treatment system further comprises an SCR catalyst article upstream of the first catalyst article, then the means for the injection of a nitrogenous reductant is preferably located upstream of the SCR catalyst article. The benefits of having a means for the injection of a nitrogenous reductant upstream of an SCR catalyst are known to the skilled person. For embodiments in which the fuel combustor is an ammonia-combustion engine, then it may not be necessary to include a means for the injection of a nitrogenous reductant upstream of an SCR catalyst, since the exhaust gas may already contain an acceptable concentration of ammonia. However, it may be advantageous for the reasons described herein to increase the concentration of ammonia in the exhaust gas upstream of the SCR catalyst article even further, for example to a level greater than that required for the SCR reaction, so that some ammonia intentionally passes through the SCR catalyst unreacted. This means that some of the ammonia (or nitrogenous reductant) introduced upstream of the SCR catalyst article may still reach the first catalyst article of the invention.

Alternatively, for a particular use, if it is considered that the concentration of ammonia at the SCR catalyst article is acceptable, then a means for the injection of a nitrogenous reductant may be provided between the SCR catalyst article and the first catalyst article of the invention, for example, so that it is certain that some ammonia will reach the first catalyst article to achieve the benefits described herein.

Moreover, since the first catalyst article may preferably be at least the second or third catalyst article present in the exhaust gas treatment system in the upstream to downstream direction, the temperature of the exhaust gas at the location of the first catalyst article of the invention may be relatively low. This means that the temperature of the first catalyst article itself may be relatively low. Accordingly, ensuring that there is ammonia present in the exhaust gas that contacts the first catalyst article provides further advantages because, as described herein, the presence of ammonia may enable the Fe-based molecular sieve of the invention to convert the N₂O at lower temperature than in the absence of ammonia.

When the exhaust gas treatment system further comprises an SCR catalyst article upstream of the first catalyst article, then the exhaust gas treatment system preferably further comprises a first means for the injection of a nitrogenous reductant upstream of the SCR catalyst article and a second means for the injection of a nitrogenous reductant between the SCR catalyst and the first catalyst article. Having a means for the injection of a nitrogenous reductant in both of these locations may enable all of the associated advantages discussed above to be achieved. Moreover, this arrangement may enable the particular concentration of ammonia in the exhaust gas at different locations in the exhaust gas treatment system to be tuned and/or varied, for example depending on the particular use or the particular conditions. For example, at low temperatures near the start of a fuel combustor or engine cycle, it may be beneficial to introduce a relatively higher concentration of nitrogenous reductant immediately upstream of the first catalyst article of the invention, i.e. while the catalyst may be cold, and then introduce a relatively lower concentration of nitrogenous reductant as the fuel combustor or engine and therefore the first catalyst article of the invention starts to warm up to a higher operating temperature. When the exhaust gas treatment system further comprises an ASC article upstream of the first catalyst article, then the second means for the injection of a nitrogenous reductant is preferably downstream of the ASC article. Preferably the first catalyst article is the last catalytic component of the exhaust system before the treated exhaust gases are released to the atmosphere.

The first catalyst article may be configured to be electrically heated. In other words, the first catalyst article is preferably an electrically heated catalyst (EHC). As described above, since the first catalyst article may preferably be at least the second or third catalyst article present in the exhaust gas treatment system in the upstream to downstream direction, the temperature of the exhaust gas at the location of the first catalyst article of the invention may be relatively low. This also means that the activity of the catalyst may be lower than its potential. This problem can be solved by actively heating the first catalyst article by means of an electric heater. EHCs, in general, are known to the skilled person. This embodiment is not limited to a particular type of EHC. If an ASC is present, then the EHC may not be required (or simply less heating may be required), since the ASC may create an exotherm during use that may heat the first catalyst article, particularly if the ASC and the first catalyst article of the invention are close-coupled.

Preferably, the small- or medium-pore molecular sieve of the first catalyst article is substantially free of base metals other than Fe loaded thereon. The term "substantially free of" as used herein may encompass that the small- or medium-pore molecular sieve of the first catalyst article comprises less than 0.1 wt.%, more preferably less than 0.05 wt.%, even more preferably less than 0.01 wt.% and still more preferably less than 0.001 wt.% of the component (here, a base metal other than Fe), based on the total weight of the Fe-loaded small- or medium-pore molecular sieve. More preferably, the small- or medium-pore molecular sieve of the first catalyst article does not comprise base metals other than Fe loaded thereon. More preferably, the small- or medium-pore molecular sieve of the first catalyst article is substantially free of transition metals other than Fe loaded thereon. Most preferably, the small- or medium-pore molecular sieve of the first catalyst article does not comprise transition metals other than Fe loaded thereon.

In other words, Fe is preferably the only base metal that is loaded on the small- or medium-pore molecular sieve and more preferably the only transition metal that is loaded on the small- or medium-pore molecular sieve. Of course, there is a chance that other metals may be present if the first catalyst article has other layers or zones disposed thereon, for example, which are for a different purpose and therefore may comprise different components which may contain metals other than Fe. That is, the other metals may be transferred due to physical contact. It is not intended to exclude such embodiments.

In a further aspect, the present invention provides a method of treating an exhaust gas from a nitrogen-containing-fuel- or hydrogen-combustor, the method comprising passing the exhaust gas through a catalyst article comprising an Fe-loaded small- or medium-pore molecular sieve, the small- or medium-pore molecular sieve having a SAR of from 6 to 19. Preferably, the method comprises passing the exhaust gas through the exhaust gas treatment system as defined in the first aspect. Preferably, the temperature of the exhaust gas and/or the catalyst article is from 350 to 500°C.

All preferred embodiments and features described herein in relation to the first aspect apply equally to this aspect.

In a further aspect, the present invention also provides the use of an Fe-loaded small- or medium-pore molecular sieve to reduce the concentration of N₂O in an exhaust gas from a nitrogen-containing-fuel- or hydrogen-combustor, wherein the small- or medium-pore molecular sieve has a SAR of from 6 to 19.

All preferred embodiments and features described herein in relation to the first aspect apply equally to this aspect. As described herein, such a use has not previously been contemplated. The advantages of such a use are discussed herein.

The invention will now be described in relation to the following non-limiting drawings in which:
Figure 1 shows the N₂O conversion at 400°C for five catalyst compositions corresponding to an Fe-loaded small- or medium-pore zeolite suitable for the first catalyst article of the invention compared to four comparative catalyst compositions.
Figure 2 shows the N₂O conversion over a temperature range of 150-500°C for a catalyst composition corresponding to an Fe-loaded small- or medium-pore zeolite suitable for the first catalyst article of the invention compared to a comparative catalyst composition.

The invention will now be described in relation to the following non-limiting examples.

### EXAMPLES

### Example 1:

Nine catalyst compositions were manufactured by incipient wetness impregnation of an FeCl₂ salt into a pre-prepared zeolite having a particular framework and SAR. Each catalyst composition was loaded with 3 wt.% Fe, based on the total weight of the Fe/zeolite. In particular, a metal salt solution using FeCl₂ (Alfa Aesar Iron(II) chloride, anhydrous, 99.5% (metals basis)) and double distilled H₂O was prepared and then added dropwise to the relevant zeolite sample. The mixture was homogenously mixed until a wet sand appearance was observed. After preparation, the samples were dried for 2 hours at 105°C in a static oven.

Once dried, the powders were activated in a tube furnace with a heating rate of 10°C/min up to 500°C for 2 hours in an N₂ atmosphere.

The composition of the zeolite for each Catalyst Composition and each Catalyst Composition's N₂O performance at each temperature is shown in Table 1 below.

Catalyst Compositions 1-5 correspond to Fe-loaded small- or medium-pore zeolites suitable for the first catalyst article of the invention. Catalyst Compositions C1-C4 are comparative examples not within the scope of the Fe-loaded small- or medium-pore molecular sieves of the invention.

**Table 1**

| | | | **N₂O performance (%)** | | | |
|---|---|---|---|---|---|---|
| **Catalyst Composition** | **Framework** | **SAR** | **T=300°C** | **T=350°C** | **T=375°C** | **T=400°C** |
| 1 | CHA | 7 | 5.8 | 27.1 | 73.4 | 99.8 |
| 2 | CHA | 10 | 4.9 | 40.5 | 75.4 | 99.5 |
| 3 | CHA | 13 | - | - | - | 77.2 |
| 4 | AEI | 13 | 7.6 | 13.5 | 24.4 | 60.4 |
| 5 | FER | 18 | 0.9 | 6.1 | 19.7 | 53.3 |
| | | | | | | |
| C1 | CHA | 25 | - | - | - | 39.1 |
| C2 | AEI | 20 | 6.9 | 13.0 | 22.7 | 53.5 |
| C3 | BEA | 28 | - | - | - | 14.0 |
| C4 | MFI | 22 | 6.3 | 11.3 | 14.5 | 16.6 |

Table 1 shows the results of N₂O performance tests at four different temperatures: 300, 350, 375 and 400°C. In particular, 0.2 g of pelletised sample was tested in a total flow of 100 ml/min, of which 58% was He, 40% Ar, 1% N₂O and 1% O₂. The temperatures explored ranged from 300 to 400°C. A ramp rate of 10°C/min was set up for each temperature followed by a dwell of 45 minutes. The data were analysed using a mass spectrometer. The "N₂O performance" refers to the N₂O conversion at that particular temperature, i.e. the percentage of N₂O consumed from the sample gas after passing through the example catalyst, on a ppm basis. For the avoidance of doubt, CHA and AEI are small-pore zeolites, FER and MFI are medium-pore zeolites and BEA is a large-pore zeolite.

As described herein, it can be seen that the N₂O performance of the catalyst compositions that may be used in the fuel combustion and exhaust gas system of the invention is significantly higher than the comparative catalyst compositions, in which the zeolites have higher SAR and/or are large-pore zeolites. Moreover, surprisingly, the N₂O performance of the catalyst composition increases as the SAR decreases. The N₂O performance of the CHA zeolite having a SAR of 7 and the CHA zeolite having a SAR of 10 (Catalyst Compositions 1 and 2, respectively) is comparable.

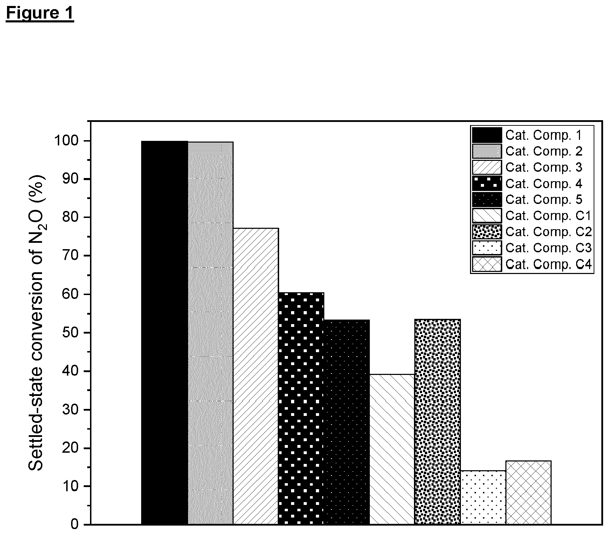

Figure 1 shows the N₂O conversion at 400°C for five catalyst compositions corresponding to an Fe-loaded small- or medium-pore zeolite suitable for the first catalyst article of the invention compared to four comparative catalyst compositions. In other words, Figure 1 is a visual representation of the rightmost column of Table 1. From left to right, the bars in Figure 1 relate to, in order, Catalyst Composition 1, Catalyst Composition 2, Catalyst Composition 3, Catalyst Composition 4, Catalyst Composition 5, Catalyst Composition C1, Catalyst Composition C2, Catalyst Composition C3 and Catalyst Composition C4.

### Example 2:

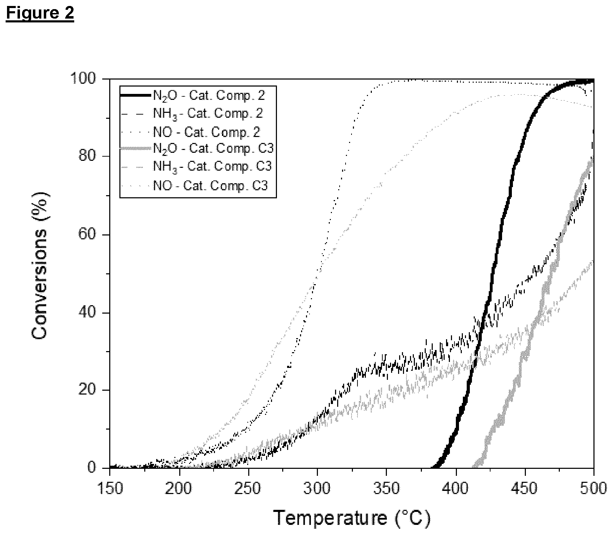

Catalyst Compositions 2 and C3 were tested under a full gas mixture including 100ppm N₂O, 4500ppm NH₃, 1000ppm NO, 10% O₂, 10% H₂O and T=150-500°C. 0.3 g of pelletised catalyst was tested in 2 L/min of gas flow. The results are shown in Figure 2.

It can be seen that Catalyst Composition 2 shows significantly higher N₂O conversion at lower temperatures than Catalyst Composition C3. The inventive catalyst therefore also remans advantageous over the comparative catalyst even when exposed to a full gas mixture.

The foregoing detailed description has been provided by way of explanation and illustration, and is not intended to limit the scope of the appended claims. Many variations in the presently preferred embodiments illustrated herein will be apparent to one of ordinary skill in the art and remain within the scope of the appended claims and their equivalents.

## Claims

1. A fuel combustion and exhaust gas system comprising a fuel combustor and an exhaust gas treatment system, wherein the fuel combustor is a nitrogen-containing-fuel- or hydrogen-combustor and wherein the exhaust gas treatment system comprises a first catalyst article comprising an Fe-loaded small- or medium-pore molecular sieve, the small- or medium-pore molecular sieve having a silica-to-alumina ratio (SAR) of from 6 to 19.

2. The fuel combustion and exhaust gas system of claim 1, wherein the small- or medium-pore molecular sieve of the first catalyst article has a framework defined by a Framework Type Code selected from CHA, FER, MFI, AEI and AEI-CHA intergrowth, preferably CHA and AEI, more preferably CHA.

3. The fuel combustion and exhaust gas system of any preceding claim, wherein the small- or medium-pore molecular sieve of the first catalyst article is a small- or medium-pore zeolite.

4. The fuel combustion and exhaust gas system of any preceding claim, wherein the small- or medium-pore molecular sieve of the first catalyst article has a SAR of from 6 to 13, preferably from 7 to 12, more preferably from 9 to 11, even more preferably about 10.

5. The fuel combustion and exhaust gas system of any preceding claim, wherein the small- or medium-pore molecular sieve of the first catalyst article is loaded with at least 0.5 wt.% Fe, preferably from 1.5 to 4 wt.% Fe, more preferably about 3 wt.% Fe, based on the total weight of the Fe-loaded small- or medium-pore molecular sieve.

6. The fuel combustion and exhaust gas system of any preceding claim, wherein the first catalyst article is a flow-through monolith or a wall-flow filter.

7. The fuel combustion and exhaust gas system of any preceding claim, wherein the exhaust gas treatment system further comprises an SCR catalyst article upstream of the first catalyst article.

8. The fuel combustion and exhaust gas system of any preceding claim, wherein the exhaust gas treatment system further comprises an ammonia slip catalyst (ASC) article upstream of the first catalyst article.

9. The fuel combustion and exhaust gas system of claim 8 when dependent on claim 7, wherein the SCR catalyst article is upstream of the ASC article.

10. The fuel combustion and exhaust gas system of any preceding claim, wherein the exhaust gas treatment system further comprises a means for the injection of a nitrogenous reductant upstream of the first catalyst article, preferably upstream of the SCR catalyst article when dependent on claim 7, preferably wherein the nitrogenous reductant comprises ammonia and/or urea.

11. The fuel combustion and exhaust gas system of claim 7, wherein the exhaust gas treatment system further comprises a first means for the injection of a nitrogenous reductant upstream of the SCR catalyst article and a second means for the injection of a nitrogenous reductant between the SCR catalyst and the first catalyst article.

12. The fuel combustion an exhaust gas system of any preceding claim, wherein the first catalyst article is configured to be electrically heated.

13. The fuel combustion and exhaust gas system of any preceding claim, wherein the small- or medium-pore molecular sieve of the first catalyst article is substantially free of base metals other than Fe loaded thereon, preferably substantially free of transition metals other than Fe loaded thereon.

14. A method of treating an exhaust gas from a nitrogen-containing-fuel- or hydrogen-combustor, the method comprising passing the exhaust gas through a catalyst article comprising an Fe-loaded small- or medium-pore molecular sieve, the small- or medium-pore molecular sieve having a SAR of from 6 to 19, preferably wherein the method comprises passing the exhaust gas through the exhaust gas treatment system as defined in any of claims 1 to 13.

15. Use of an Fe-loaded small- or medium-pore molecular sieve to reduce the concentration of N₂O in an exhaust gas from a nitrogen-containing-fuel- or hydrogen-combustor, wherein the small- or medium-pore molecular sieve has a SAR of from 6 to 19.
